# EUROPEAN PATENT APPLICATION

(11) **EP 1 744 269 A1**
(43) Date of publication of application: **17.01.2007**
(21) Application number: 05024211.4
(22) Date of filing: 07.11.2005
(51) Int. Cl.: G06Q 10/00, G09B 29/00, G08G 1/0969

(54) **Vehicle-mounted information indication device and vehicle information communication system using the same**

(30) Priority: 12.07.2005 JP 2005202638
(71) Applicant: Data Tron Co., Ltd, Tokiwamachi Tamura-shi Fukushima 963-4602 (JP)
(72) Inventor: Koyama, Toshiaki, Tokiwamachi Tamura-shi,Fukushima963-4602 (JP); Yoshida, Taichi, Tokiwamachi Tamura-shi Fukushima963-4602 (JP)
(74) Representative: Vossius & Partner

(57) **Abstract**

A vehicle-mounted information indication device of the present invention comprises a vehicle-mounted terminal 2 mounted on a vehicle. The vehicle-mounted terminal 2 comprises a CPU 6, a GPS receiver 7, a vehicle speed sensor 8, a gyro 9, an acceleration sensor 10, a beacon receiver 11, a status input device 12, a marker post database 13, a map database 14, a map monitor 15, an audio output device (corresponding to the voice reporting device of the present invention) 16, and an external storage device 17. Not only the position of the vehicle but also amarkerpost sign at the location of the vehicle are displayed together on a monitor screen of the map monitor 15. Therefore, an occupant such as a driver of the vehicle can be informed of the position of the vehicle on the ground where the vehicle travels and can be easily, accurately, and promptly informed of the marker post sign at the location of the vehicle.

## Description

The present invention relates to a technical field of a vehicle-mounted information indication device which is mounted on a vehicle for displaying positional information and operational information about a subject vehicle and information about maintenance of a road at the location of the subj ect vehicle on an electronic map and a technical field of a vehicle information communication system for displaying positional information and operational information about a maintenance vehicle and information about maintenance of a road at the location of the maintenance vehicle on an electronic map for allowing a control center to control the maintenance vehicle.

Conventionally, car navigation systems have been in wide spread of use in vehicles such as automobiles. Such a car navigation system is disclosed, for example, in JP-A-H5-113756. As disclosed in this publication, an electronic map corresponding to the subj ect vehicle's position detected by GPS is displayed onto an electronic display device and the position of the subj ect vehicle is specified according to autonomous navigation based on the coordinates on the map. Based on the specified position of the subject vehicle, the position of the subject vehicle is directly displayed on the electronic map or the latitude and longitude values of the position of the subject vehicle are displayed, thereby informing an occupant of the position of the subject vehicle.

On the other hand, positional marker posts indicating positional information such as kiloposts (mileposts) indicating distances from a starting point of a highway to present points and road signs indicating information such as destinations of ways at branch points are disposed on median strips and above lanes of the highway. Each driver of general vehicles sees the information indicated by the positional marker posts and the road signs directly with his or her eyes or through a camera to check the subject vehicle's position and to take actions for changing the lane near a branch point for his or her destination and the like. An operator such as a driver on a working vehicle for administrative inspection not only checks the vehicle's position and steers the vehicle to the destination but also conduct the management of works for road maintenance, including checking the labor time and the work process.

Also on local streets, marker posts indicating positional information such as bus stops and locations including street name and lot number and road signs are disposed, each driver catches the information indicated by the marker posts and the road signs in the same manner as mentioned above.

In case where the vehicle' s position is checked by seeing the marker posts and the road signs directly with eyes or through a camera, however, it is sometimes difficult to recognize the information on the marker posts and the road signs and even to recognize the existence of the marker post and the rod signs according to the weather condition, the driving condition, and/or the traveling condition. Therefore, it is difficult to accurately conduct the management of works for the maintenance of roads. In addition, to know the information on the marker posts and the road signs without fail, it is required to increase the number of operators.

As disclosed in JP-A-2001-264087, a vehicle-mounted position management information display device, enabling a user to learn of more accurately the contents of marker posts and road signs in the following manner. That is, the latitude and longitude values of the present position of a working vehicle for road maintenance on which the position information display device is mounted are detected by GPS satellites. The detected information is received by a GPS receiver through a GPS antenna. Based on the detected information, a microcomputerized circuit takes out the information on the appropriate marker post or road sign and the latitude and longitude values indicating positional coordinates from a marker post or road sign data base and transmits the information to an output device and a data transfer port. The output device displays the transmitted information to inform an occupant in the working vehicle. On the other hand, a communication device is connected to the data transfer port, thereby allowing the information to be transmitted to a remote location. Alternatively, a storage device is connected to the data transfer port, thereby storing the information. According to the vehicle-mounted position management information display device having the aforementioned structure, the user can learn of more accurately the respective contents of the marker posts and the road signs.

However, since a conventional car navigation system such as the car navigation system as disclosed in

JP-A- H5-113756 just indicates the vehicle's position on the map or the latitude and longitude values of the vehicle' s position, such a car navigation system has a problem that it is difficult to accurately inform a third party of the precise position of the vehicle when the vehicle suffers an accident or trouble, for example, in a highway. Particularly, it is difficult to specify the vehicle' s position when the vehicle is in a tunnel according to the autonomous navigation based on the coordinates on the map.

In addition, the conventional car navigation system also has a problem that the driver can not accurately know the condition of a road along which the subject vehicle travels because information about management of road condition is not displayed in the car navigation system.

On the other hand, the vehicle-mounted position management information display device disclosed in

JP-A-2001-264087 enables rather accurate management of road maintenance based on the respective contents of marker posts and road signs by displaying the contents of the marker posts and the road signs. However, since there is no linkage between the position of the subject vehicle and the map, it is difficult to specify the exact position of the vehicle in a road similarly to the aforementioned case so that the vehicle-mountedposition management information display device still has a problem that it is difficult to more accurately conduct management of road maintenance based on the respective contents of marker posts and road signs to be displayed.

It is an object of the present invention to provide a vehicle-mounted information indication device capable of indicating marker post signs as well as the position of a subject vehicle.

It is another object of the present invention to provide a vehicle information communication system which achieves improved accuracy of and laborsaving of management of works and management of road condition and also provides improved safety of the vehicle traveling.

To achieve the aforementioned objects, a vehicle-mounted information indication device of the present invention is a vehicle-mounted information indication device which is mounted on a vehicle that can travel on the ground, and is characterized by comprising a monitor for displaying the position of said vehicle on said ground and a marker post sign on said ground.

A vehicle-mounted information indication device of the present invention is further characterized in that said marker post sign is obtained from information by GPS measurement and/or at least one of information of vehicle speed by a vehicle-speed sensor, information of direction by a gyro, and information of acceleration by an acceleration sensor, and that a map corresponding to said ground is displayed on the screen of said monitor and the position of said vehicle and said marker post sign are also displayed on the map.

A vehicle-mounted information indication device of the present invention is further characterized by comprising a voice reporting device which can indicate the position of said vehicle and said marker post sign by sound or voice.

A vehicle-mounted information indication device of the present invention is a vehicle-mounted information indication device which is mounted on a vehicle that can travel on the ground and is characterized by comprising a voice reporting device which can indicate the position of said vehicle on said ground and a marker post sign on said ground by sound or voice.

A vehicle-mounted information device of the present invention is further characterized by comprising a status input device for inputting status information such as information of works to be conducted at said marker post sign, information about management of works, and information about management of road condition and an external storage device for storing said marker post sign and said status information.

A vehicle information communication system of the present invention is a vehicle information communication system comprising a vehicle-mounted terminal mounted on said vehicle, a control center for controlling said vehicle, a communication terminal which is mounted on said vehicle for outputting information from said vehicle-mounted terminal, and a mobile communication network for transmitting the information outputted from said communication terminal to said control center, and is characterized in that said vehicle-mounted terminal is one of the aforementioned vehicle-mounted information indication devices of the present invention.

A vehicle information communication system of the present invention is further characterized in that said mobile communication network is a wide-area radio communication means such as a wireless phone or a cellular phone.

According to the vehicle-mounted information indication device of the present invention, not only the position of a subject vehicle but also a marker post sign at the location of the vehicle are displayed together on the vehicle-mounted information indication device. Therefore, an occupant such as a driver of the vehicle can be informed of the position of the vehicle on the ground where the vehicle travels and can be easily, accurately, and promptly informed of the marker post sign at the location of the vehicle. For example, using a conventional car navigation device as the vehicle-mounted information indication device, a marker post sign can be popped up near the vehicle's position (vehicle icon) on a map displayed on a monitor screen of the car navigation device. Accordingly, an occupant such as a driver can be not only informed of the position of the maintenance vehicle (subject vehicle) but also easily and accurately informed of the marker post signs. In addition, information about the position of the maintenance vehicle (subject vehicle), the marker post sign, and the work to be conducted can be outputted by sound or voice, whereby the occupant can be informed of the aforementioned information without seeing the monitor screen, thereby further improving the safety.

The map corresponding to the position of the vehicle can be displayed on the monitor screen based on the information of the GPS measurement similarly to the conventional car navigation device and further an icon representing the subject vehicle can be indicated in the displayed map. In addition, the marker post sign corresponding to the vehicle's position can be also indicated on the map. Moreover, marker post sign can be obtained based on vehicle-speed pulse signals from a vehicle-speed sensor (for example, the marker post sign can be obtained by counting the number of vehicle-speed pulses from the start of traveling) and the obtained marker post sign can be displayed on the monitor screen. Therefore, even at a place where the GPS measurement is impossible such as inside a tunnel, the marker post sign can be displayed on the screen of the vehicle-mounted information indication device. Therefore, the occupant can be securely informed of the marker post sign even when the maintenance vehicle (subject vehicle) travels at any place in road. Especially, by adding at least one of a gyro and an acceleration sensor in addition to the vehicle-speed sensor, the marker post sign can be displayed on the screen of the vehicle-mounted display device even when the maintenance vehicle (subject vehicle) passes through a branch point inside a tunnel. In this case, since the contiguous information as the kilopost information is used, the position of the subject vehicle can be specified more accurately than a conventional autonomous navigation based on the map coordinates.

Since obtainedmarker post signs are stored in the external storage device and, in addition, status information such as the marker post signs, information about works to be conducted at corresponding marker posts, information about management of work, and information about management of road condition are stored into the external storage device according to the status input information from the status input device, a detailed work sheet can be prepared based on the information about marker post signs and the respective status information stored in the external storage device. By displaying the detailed work sheet on the monitor screen, the management of works on road and the management of road condition can be securely and promptly conducted.

On the other hand, according to the vehicle information communication system of the present invention, the aforementioned respective information of the vehicle-mounted information indication device can be transmitted to the control center through the communication terminal and the mobile communication network in real time. Therefore, a map corresponding to the maintenance vehicle (subject vehicle) and an icon of the vehicle can be displayed on a monitor screen of the control center and a marker post sign is popped up near the icon. Therefore, an administrator of the maintenance vehicle (subject vehicle) learns of the information and can conduct the status management such as the management of traveling of the maintenance vehicle (subject vehicle), the management of works, and the management of road condition in real time. That is, the administrator can be accurately informed of the position of the maintenance vehicle (subject vehicle) on road and thus can easily and accurately figure out whether the road is a local street or a highway. Further, in case that the maintenance vehicle (subject vehicle) travels along a highway, the administrator can easily and accurately figure out whether the direction of the vehicle is up or down of the highway. In addition, the administrator can be accurately informed of management of works and management of road condition relating to the maintenance vehicle.

Still other objects and advantages of the invention will in part be obvious and will in part be apparent from the specification.

The invention accordingly comprises the features of construction, combinations of elements, and arrangement of parts which will be exemplified in the construction hereinafter set forth, and the scope of the invention will be indicated in the claims.

Hereinafter, an embodiment of the present invention will now be described with reference to the drawings.
Fig. 1 is a diagram schematically showing an embodiment of a vehicle information communication system according to the present invention;
Fig. 2 is a block diagram showing an example of a vehicle-mounted information indication device to be used in the vehicle information communication system of the embodiment shown in Fig. 1;
Fig. 3 is an illustration schematically showing a monitor screen of the example of the vehicle-mounted information indicating device according to the present invention;
Fig. 4 is an illustration schematically showing an example of the monitor screen of a control center in the vehicle information communication system shown in Fig. 1; and
Fig. 5 is an illustration schematically showing another example of the monitor screen of the control center in the vehicle information communication system shown in Fig. 1.

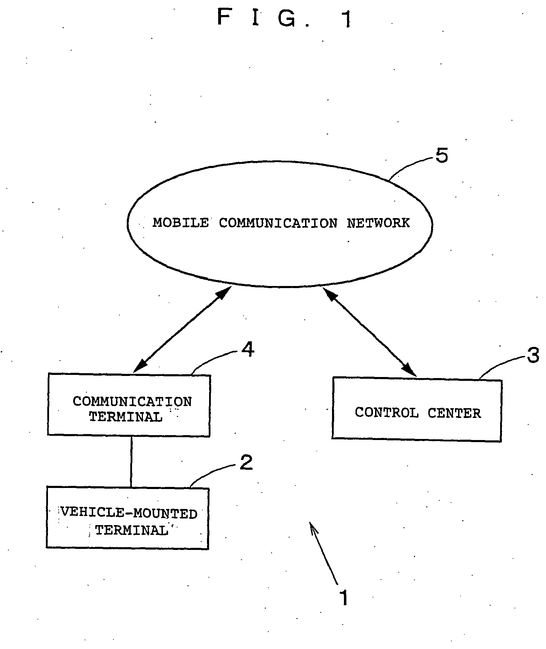

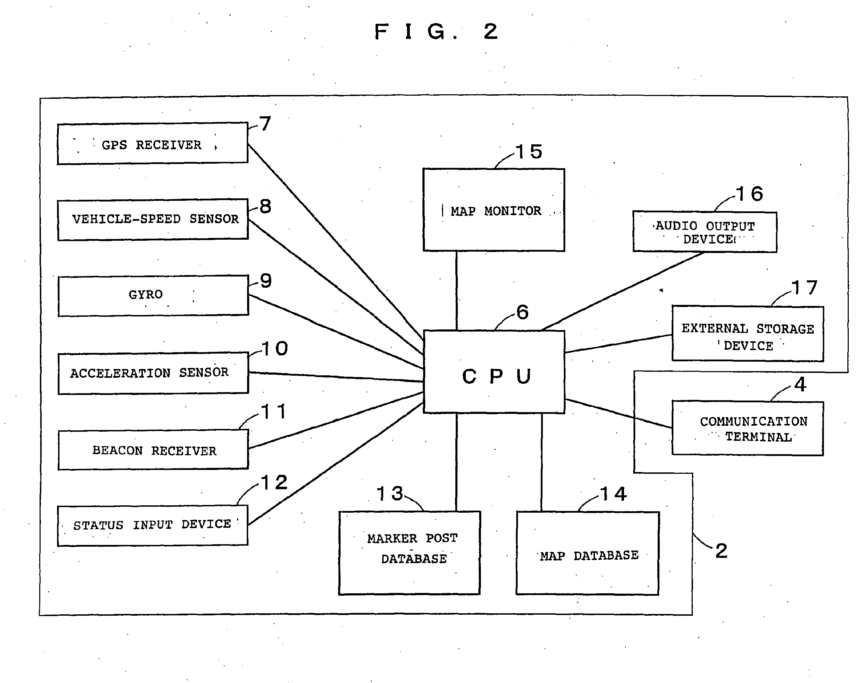

Fig. 1 is a diagram schematically showing an embodiment of a vehicle information communication system according to the present invention and Fig. 2 is a block diagram showing an example of a vehicle-mounted information indication device to be used in the vehicle information communication system of this embodiment.

As shown in Fig. 1, the vehicle information communication system 1 of this embodiment comprises a vehicle-mounted terminal 2 mounted on a maintenance vehicle (subject vehicle), a control center 3 for controlling the maintenance vehicle, a communication terminal 4 mounted on the maintenance vehicle for outputting information from the vehicle-mounted terminal 2, and a mobile communication network 5 for transmitting information outputted from the communication terminal 4 to the control center 3.

As shown in Fig. 2, the vehicle-mounted terminal 2 is mounted on a vehicle which can travel on the ground such as a road so as to compose an example of the vehicle-mounted information indication device of the present invention, and comprises a central processing unit (CPU) 6, a GPS receiver 7, a vehicle speed sensor 8, a gyro 9, an acceleration sensor 10, a beacon receiver 11, a status input device 12, a marker post database 13, a map database 14, a map monitor 15, an audio output device (corresponding to the voice reporting device of the present invention) 16, and an external storage device 17. The GPS receiver 7, the vehicle speed sensor 8, the gyro 9, the acceleration sensor 10, the beacon receiver 11, the status input device 12, the marker post database 13, the map data base 14, the map monitor 15, the audio output device 16, and the external storage device 17 are all connected to the CPU 6. Also connected to the CPU 6 is the communication terminal 4. As the vehicle-mounted information indication device, a conventional typical car navigation device may be employed. However, the vehicle-mounted information indication device is not limited thereto and may be any information indication device to be mounted on a vehicle.

The GPS receiver 7 is adapted to receive signals from GPS satellites (not shown) via a GPS antenna (not shown) so as to detect latitude and longitude values indicating the present position of the maintenance vehicle (subject vehicle), on which the vehicle-mounted terminal 2 is mounted, and transmit the information about the latitude and longitude values of the present position of the maintenance vehicle (subject vehicle) to the CPU 6.

The vehicle speed sensor 8 is adapted to detect the vehicle speed of the maintenance vehicle (subject vehicle), convert the information about the vehicle speed into a pulse signal, and transmit the pulse signal to the CPU 6.

The gyro 9 is adapted to measure the direction of the maintenance vehicle (subject vehicle) and transmit information about the direction to the CPU 6.

The acceleration sensor 10 is adapted to detect the acceleration of the maintenance vehicle (subject vehicle) and transmit information about the acceleration to the CPU 6.

The beacon receiver 11 is adapted to receive signals from beacons embedded in roads and transmit information of the present position of the maintenance vehicle (subject vehicle) based on the positional data of the beacons to the CPU 6.

The status input device 12 is a status input means such as switches and external signal input means and is adapted to transmit signals of status inputs of the maintenance vehicle (subject vehicle) to the CPU 6.

The marker post database 13 stores marker post signs of various marker posts. In the present invention, the maker post signs include data of signs of kiloposts (mileposts) of highways, data of distance values from the starting points of roads, positional data from beacons embedded in roads and the like, and data of signs indicating position checking markers such as IC tags. The maker post signs are contiguous data along each road. The marker post database 13 stores at least one of the aforementioned various data and the data of works to be conducted at each marker post sign and is adapted to transmit stored data to the CPU 6.

The map database 14 is adapted to transmit stored map data to the CPU 6.

The map monitor 15 is adapted to display positional information about the present position of the maintenance vehicle (subject vehicle), information of the direction of the maintenance vehicle (subject vehicle), map data, positional data of the marker posts (marker post signs), and data of works to be conducted from the CPU 6 onto a monitor screen.

The audio output device 16 is adapted to output information about the present position of the maintenance vehicle (subject vehicle), information of the direction of the maintenance vehicle (subject vehicle), map data, positional data of the marker posts (marker post signs), and data of works to be conducted from the CPU 6 by sound or voice. As the audio output device 16, a car audio device of a type mounted on a vehicle such as an ordinary automobile may be employed. However, the audio output device 16 is not limited thereto.

The external storage device 17 is a storage means such as a memory card and is adapted to store marker post signs every second.

The mobile communication network 5 is a general wide-area radio communication means (corresponding to the wide-area radio communication means of the present invention) such as a wireless phone or a cellular phone.

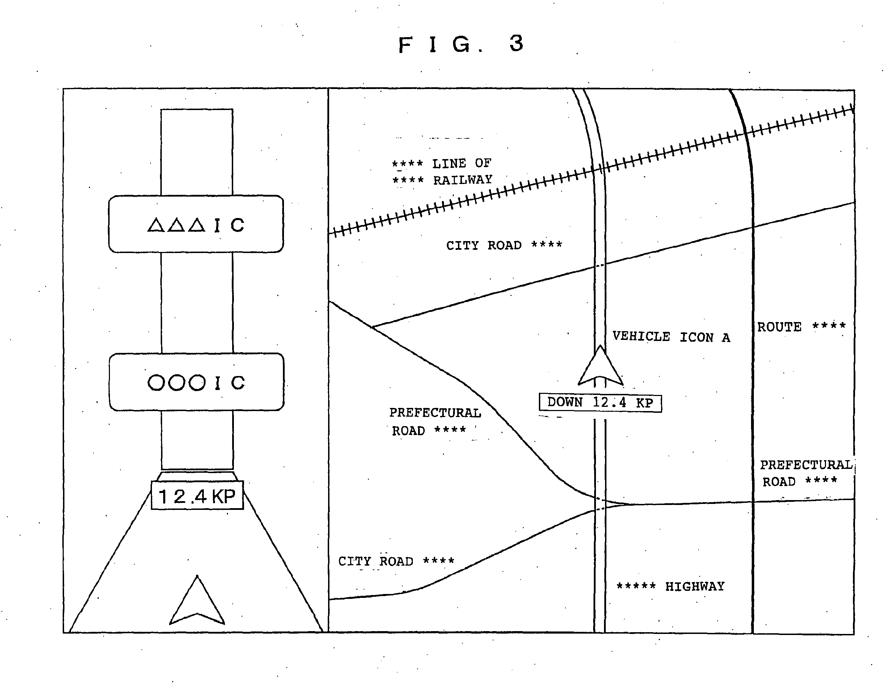

In the vehicle-mounted information indication device of this embodiment having the aforementioned structure, based on the positional information about the position of the maintenance vehicle (subject vehicle) from the GPS receiver 7, the CPU 6 calls up the map data corresponding to the positional information and displays the map data and a vehicle icon A indicating the present position of the maintenance vehicle (subject vehicle) on a map monitor screen (in the example of Fig. 3, a right-side screen occupying 2/3 of the monitor screen) of the map monitor 15 as, for example, a display of a conventional typical car navigation as shown in Fig. 3.

Based on the positional information about the position of the maintenance vehicle (subject vehicle) from the GPS receiver 7, the CPU 6 calls up the position of a marker post corresponding to the positional information from the marker post database 13 and pops up the marker post sign near the vehicle icon A (the marker post sign says "Down 12.4 KP" in the example of Fig. 3: This means 12.4 kilopost of the down lane.) The marker post data are contiguous positional data along the road. There fore, based on the contiguous positional data, the CPU 6 determines the traveling direction of the maintenance vehicle (subject vehicle), that is, whether the maintenance vehicle (subject vehicle) is on the up lane or the down lane. According to this determination, the CPU 6 displays this (i.e. Up or Down) on the map monitor screen of the map monitor 15.

The monitor screen of the map monitor 15 is provided with a simplified display screen for displaying the highway (in the example of Fig. 3, a left-side screen occupying 1/3 of the monitor screen). The CPU 6 displays the marker post sign also on the simplified display screen. In this case, the simplified display screen shows the down lane so that only the marker post sign is displayed (the marker post sign says only "12.4 KP" in the example of Fig. 3).

The CPU 6 outputs the position of the maintenance vehicle (subject vehicle) and the marker post sign by sound or voice from the audio output device 16, if necessary. By the audio output, a vehicle occupant is informed of the position and the marker post sign without seeing the map monitor screen (including the simplified display screen in case of highway) of the map monitor 15.

On the other hand, in a road along which the maintenance vehicle (subject vehicle) travels, there must be places where the GPS measurement is impossible such as inside a tunnel. At such a place where the GPS measurement is impossible, the CPU 6 obtains a corresponding marker post sign based on information about vehicle speed, information of direction, and information of acceleration from the vehicle-speed sensor 8, the gyro 9, and the acceleration sensor 10 and display the value on the map monitor screen of the map monitor 15 (also on the simplified display screen in case of highway) . Since themarkerpost database 13 which stores contiguous positional data along the road is provided, the CPU 6 can calculate the position more accurately than a conventional typical car navigation.

The corresponding marker post sign can be calculated only with information from a less number of sensors, for example, only with the information of vehicle speed of the maintenance vehicle (subject vehicle) from the vehicle-speed sensor 8 or only with the information of vehicle speed of the maintenance vehicle (subject vehicle) from the vehicle-speed sensor 8 and the information of acceleration from the acceleration sensor 10.

Besides the positional data of kiloposts, the positional data stored in the marker post database 13 may be positional data of distance from a starting point of the road at constant intervals.

The CPU 6 can also display information of the present position of the maintenance vehicle (subject vehicle), based on signals from the beacons embedded in the road which include positional data of beacons and are received by the beacon receiver 11, on the monitor screen of the map monitor 15.

Further, the CPU 6 stores marker post signs which change every second during the traveling of the maintenance vehicle (subject vehicle) into the external storage device 17. By the stored marker post signs, information about movement required for analyzing the traveling history and the traveling condition of the maintenance vehicle can be easily obtained after the traveling of the maintenance vehicle.

Furthermore, the CPU 6 stores status information into the external storage device 17 to correspond to the positional information of the marker posts (the marker post signs) according to the status input information inputted by the status input device 12. The status information includes information about work to be conducted at corresponding marker posts, information about management of works, information about management of road condition, and the like. Based on the respective information stored in the external storage device 17, a detail work sheet is prepared.

It should be noted that it is not necessary to provide all of the GPS receiver 7, the vehicle-speed sensor 8, the gyro 9, the acceleration sensor 10, and the beacon receiver 11. At least one of these or a combination of some of these may be provided. The status input device 12, the audio output device 16, and the external storage device 17 are not necessarily provided and may be each provided, if necessary.

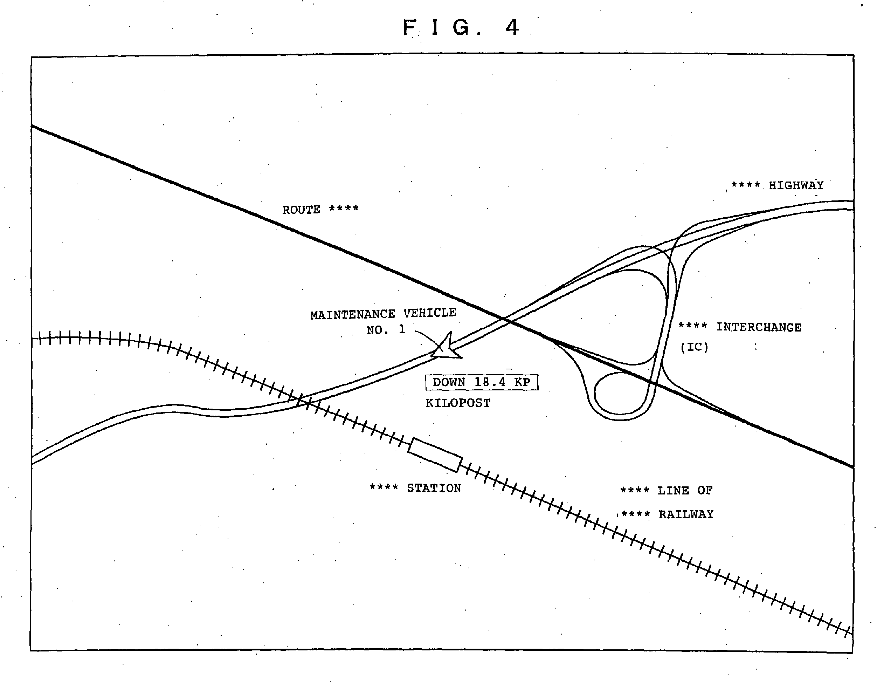

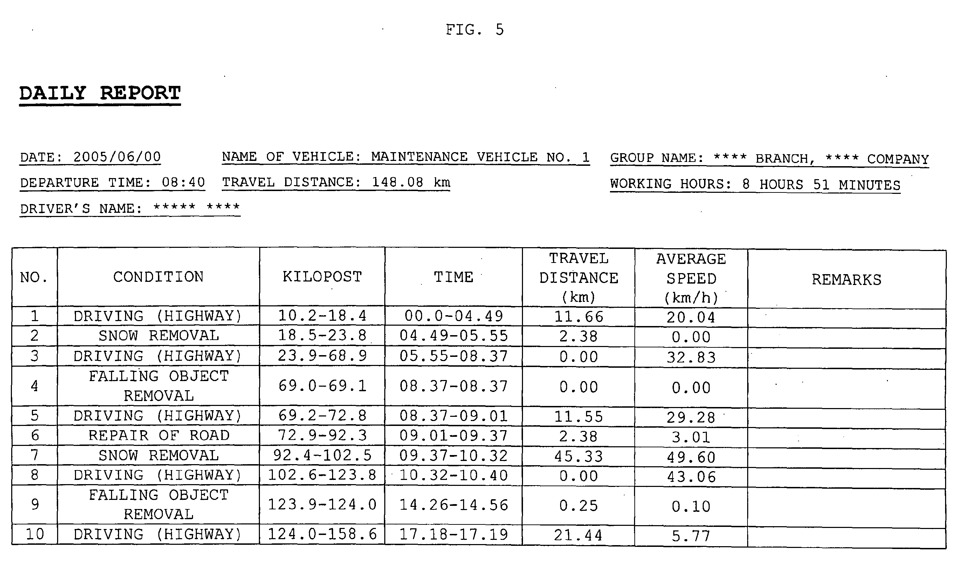

On the other hand, in the vehicle information communication system 1 of this embodiment, the CPU 6 outputs the respective aforementioned information through the communication terminal 4 and transmits the outputted information to the control center 3 through the mobile communication network 5 in real time. On the monitor screen of the control center 3, for example as shown in Fig. 4, a map and a vehicle icon A corresponding to the maintenance vehicle (subject vehicle: in the illustrated example, a maintenance vehicle No. 1) are displayed and a marker post sign is popped up near the vehicle icon A (the marker post sign says "Down 18.4 KP" in the illustrated example of Fig. 4). Therefore, an administrator of the maintenance vehicle (subject vehicle) learns of the information. Based on the information transmitted to the control center 3, a work sheet such as a daily report of the maintenance vehicle (subject vehicle) as shown in Fig. 5 is automatically prepared. The daily report of the example shown in Fig. 5 includes date, name of vehicle, group name, departure time, travel distance, working hours, and driver's name. In addition, as detail data, information such as marker postvalues (KP), timeperiods, travel distances (km), and average speeds (km/h) are recorded to correspond to driving states and working states of the maintenance vehicle (subject vehicle), respectively.

The preparation of work sheet is not limited to the aforementioned case of real-time monitoring and may be conducted, for example, based on post analysis of data stored in the external storage device 17.

The transmission of information is not limited to a case from the maintenance vehicle (subject vehicle) to the control center 3 and may be a case from the control center 3 to the maintenance vehicle (subject vehicle) via the mobile communication network 5. In this case, information to be transmitted may be message-type information such as a command message for changing the work to be conducted or an emergency message.

According to the vehicle-mounted positional information indication device of this embodiment, a conventional vehicle-mounted information indication device such as a car navigation device can be provided with a function of displaying marker posts. Therefore, a marker post sign can be popped up near the vehicle's position (vehicle icon) on a map displayed on a monitor screen of the vehicle-mounted information indication device such as a car navigation device. Accordingly, an occupant such as a driver can be not only informed of the position of the maintenance vehicle (subject vehicle) but also easily and accurately informed of the marker post signs. In addition, the work to be conducted at the corresponding marker post can be displayed on the monitor screen of the map monitor 15 by manipulating the vehicle-mounted terminal 2. Moreover, information about the position of the maintenance vehicle (subject vehicle), the marker post sign, and the work to be conducted can be outputted by sound or voice, whereby the occupant can be informed of the aforementioned information without seeing the monitor screen, thereby further improving the safety.

Marker post sign can be obtained based on vehicle-speed pulse signals from the vehicle-speed sensor 8 (for example, the marker post sign can be obtained by counting the number of vehicle-speed pulses from the start of traveling)and the obtained marker post sign can be displayed on the monitor screen of the map monitor 15. Therefore, even at a place where the GPS measurement is impossible such as inside a tunnel, the marker post sign can be displayed on a screen of a vehicle-mounted display device such as the monitor screen of a conventional typical car navigation system. Therefore, the occupant can be securely informed of the marker post sign even when the maintenance vehicle (subject vehicle) travels at any place in roads. Especially, by adding at least one of the gyro 9 and the acceleration sensor 10 in addition to the vehicle-speed sensor 8, the marker post sign can be displayed on the screen of the vehicle-mounted display device even when the maintenance vehicle (subject vehicle) passes through a branch point inside a tunnel. In this case, since the contiguous information as the kilopost information is used, the position of the subject vehicle can be specified more accurately than a conventional autonomous navigation based on the map coordinates.

Since status information such as positional information of the marker posts (marker post signs), information about works to be conducted at corresponding marker posts, information about management of works, information about management of road condition, and the like are stored into the external storage device 17 according to the status input information, a detailed work sheet can be prepared based on the respective information stored in the external storage device 17. With the detailed work sheet, the management of works on road and the management of road condition can be securely and promptly conducted.

On the other hand, according to the vehicle information communication system 1 of this embodiment, the CPU 6 transmits the aforementioned information of the vehicle-mounted terminal 2 to the control center 3 through the communication terminal 4 and the mobile communication network 5 in real time, whereby a map and a vehicle icon A corresponding to the maintenance vehicle (subject vehicle) can be displayed on the monitor screen of the control center 3 and a marker post sign is popped up near the vehicle icon A. Therefore, an administrator of the maintenance vehicle (subject vehicle) learns of the information and can manage the maintenance vehicle (subject vehicle) in real time. That is, the administrator can learn the position of the maintenance vehicle (subject vehicle) on road and thus can easily and accurately figure out whether the road is a local street or a highway. Further, in case that the maintenance vehicle (subject vehicle) travels along a highway, the administrator can easily and accurately figure out whether the direction of the vehicle is up or down of the highway.

The vehicle-mounted information indication device of the present invention can be suitably adopted to a vehicle-mounted information indication device such as a car navigation system which is mounted on a vehicle an discapable of displaying positional information and operational information of the vehicle and information about maintenance of a road at the location of the vehicle on an electronic map.

The vehicle information communication system of the present invention can be suitably adopted to a vehicle information communication system which employs a vehicle-mounted information indication device and is capable of displaying positional information and operational information of a maintenance vehicle and information about maintenance of a road at the location of the maintenance vehicle on an electronic map in order to allow a control center remote from the maintenance vehicle to control the maintenance vehicle.

## Claims

1. A vehicle-mounted information indication device which is mounted on a vehicle that can travel on the ground, comprising
a monitor for displaying the position of said vehicle on said ground and a marker post sign on said ground.

2. A vehicle-mounted information indication device as claimed in claim 1, wherein said marker post sign is obtained from information by GPS measurement and/or at least one of information of vehicle speed by a vehicle-speed sensor, informationofdirectionbyagyro,andinformationofacceleration by an acceleration sensor, and
a map corresponding to said ground is displayed on the screen of said monitor and the position of said vehicle and said marker post sign are also displayed on the map.

3. A vehicle-mounted information indication device as claimed in claim 1 or 2, further comprising a voice reporting device which can indicate the position of said vehicle and said marker post sign by sound or voice.

4. A vehicle-mounted information indication device which is mounted on a vehicle that can travel on the ground, comprising
a voice reporting device which can indicate the position of said vehicle on said ground and a marker post sign on said ground by sound or voice.

5. A vehicle-mounted information device as claimed in any one of claims 1 through 4, further comprising a status input device for inputting status information such as information of works to be conducted at said marker post sign, information about management of works, and information about management of road condition and an external storage device for storing said marker post sign and said status information.

6. A vehicle information communication system comprising a vehicle-mounted terminal mounted on said vehicle, a control center for controlling said vehicle, a communication terminal which is mounted on said vehicle for outputting information from said vehicle-mounted terminal, and a mobile communication network for transmitting the information outputted from said communication terminal to said control center, wherein
said vehicle-mounted terminal is a vehicle-mounted information indication device as claimed in any one of claims 1 through 5.

7. A vehicle information communication system as claimed in claim 6, wherein said mobile communication network is a wide-area radio communication means such as a wireless phone or a cellular phone.
